# EUROPEAN PATENT SPECIFICATION

(11) **EP 2 425 168 B1**
(45) Date of publication and mention of the grant of the patent: **03.04.2013**
(21) Application number: 11723739.6
(22) Date of filing: 25.05.2011
(51) Int. Cl.: F16L 3/10

(54) **PIPE CLIP**
ROHRKLEMME
COLLIER DE SERRAGE

(30) Priority: 02.06.2010 NL 2004804
(43) Date of publication of application: 07.03.2012
(73) Proprietor: J. van Walraven Holding B.V., 3641 RK Mijdrecht (NL)
(72) Inventor: JUZAK, Marek, NL-3641 ZS Mijdrecht (NL); VAN WALRAVEN, Jan, NL-3641 GP Mijdrecht (NL)
(74) Representative: Houben, Christiaan Hein Willem Frans
(86) International application number: PCT/NL2011/050359
(87) International publication number: WO 2011/152713

(56) References cited:
- EP-A2- 1 195 548
- DE-A1- 4 015 404

## Description

The present invention relates to a pipe clip for fastening a pipe to a wall, ceiling or other support surface. The pipe clip comprises a substantially annular pipe clip body, which in use surrounds the pipe to be fastened. The pipe clip has a first and a second flange, each flange having a free end edge and two opposite lateral edges which extend substantially in radial direction with regard to the annular clip body. The first and second flange, in use, are pulled towards each other by means of a male fastening element having a shank and a head. The first flange is associated with a female fastening means into which the male fastening element is connected to the first flange. The second flange has a slot which opens up in a lateral edge of the second flange to receive the shank of the male fastening element. On the second flange a retaining shoe is arranged, which retaining shoe has a slot which is arranged in a direction corresponding to the slot in the second flange, which slot in the retaining shoe has an introduction opening for receiving the shank of the male fastening element followed by a narrowing slot portion.

Such a pipe clip is known from EP 1 195 548. In this known pipe clip a screw is screwed in a first flange and the second flange is provided with a slot opening to a lateral edge of the second flange. A retaining shoe which consists of plastics material is arranged on the second flange, having a correspondingly oriented open ended slot. The slot in the retaining shoe on this known pipe clip narrows to a width that is smaller than the diameter of the screw shank, such that in use when the screw shank is introduced, the narrowing slot portion expands in an elastic manner such that the screw shank can pass therethrough. DE 4015404 discloses another example of a pipe clip, wherein the screw shank is maintained in the flange by a retainer.

The present invention has for an object to provide an improved pipe clip of the aforementioned type.

This object is achieved by a pipe clip according to the preamble of claim 1, in which the retaining shoe is arranged movable transversely with regard to the slot in the second flange between a retaining position and a receiving position, in which the entire slot in the retaining shoe has a width which is equal to or exceeds the diameter of the shank of the male fastening element, and in which the slot of the retaining shoe has a wedge portion on one side edge of the slot forming the narrowing slot portion, wherein - in the retaining position of the retaining shoe - the wedge portion of the side edge of the slot in the retaining shoe extends beyond the corresponding side edge of the slot in the second flange and the effective distance between the opposing side edge of the slot in the second flange and the wedge portion is smaller than the diameter of the shank of the male fastening element, such that, in use, when said shank is inserted into the slots in the second flange and the retaining shoe, the shank engages said wedge portion and forces the retaining shoe to move to the receiving position such that the shank passes beyond the wedge portion.

According to the invention the narrowest passage for the shank of the male fastening member is defined by the wedge portion of the retaining shoe and the opposing side edge of the slot in the second flange. This smallest distance is smaller than the diameter of the shank. When introducing the shank in the slot of the retaining shoe and in the slot in the second flange, the shank will slide along the wedge portion and will gradually push the movable retaining shoe in a direction transverse to the introduction movement of the shank. Due to this movement of the retaining shoe the space between the wedge portion and the opposing side edge of the slot in the second flange widens such that the shank can pass beyond the wedge portion towards the closed end of the slot.

Advantageously the force required to push the shank through the narrow passage is much less with the pipe clip according to the present invention than with the pipe clip known from EP 1 195 548.

Furthermore, the movable retaining shoe according to the present invention allows an easier release of the shank when the pipe clip should be removed from the pipe for whatever reason. The fitter simply pushes the retaining shoe aside and without resistance withdraws the shank out of the respective slots in the second flange and the retaining shoe.

Another advantage of the movable retaining shoe according to the invention is that the pipe clip can be mounted aground a pipe and demounted several times without losing its effectiveness in its retaining function. This contrary to the design of EP 1 195 548 where the shank directly deforms the narrowing retaining surface of the retaining shoe each time the shank passes the narrowed portion, which reduces the retaining function notwithstanding the elastic property of the known retaining shoe.

Preferably, the pipe clip comprises reset means to move the retaining shoe from the receiving position towards the retaining position.

In one possible embodiment of the invention the reset means comprise at least one spring member arranged on the retaining shoe which forces the retaining shoe into the retaining position. The spring member preferably engages the outside of the annular pipe clip body. Preferably the spring member is integrally formed with the retaining shoe.

The reset means may comprise an elastically deformable layer provided on the outside of the pipe clip body, wherein - in the receiving position - the retaining shoe is pushed into engagement with the deformable layer, and wherein - when the shank has passed the wedge portion - the deformable layer pushes the retaining shoe back towards the retaining position. Preferably the elastically deformable layer is a portion of a vibration isolating element, preferably made of rubber or another suitable elastomeric material, which is arranged in the pipe clip body.

In a possible embodiment the retaining shoe comprises two interconnected opposing plates which are located on the opposing sides of the second flange.

In a another possible embodiment the retaining shoe may comprise at least one stop surface which limits the movement of the retaining shoe with respect to the second flange.

In yet another possible embodiment the slot in the retaining shoe has an edge opposing the wedge portion, which edge, in the retaining position of the shoe, is located over the second flange at a distance from the corresponding side edge of the slot in the second flange.

In still another possible embodiment the slot in the shoe at the closed end thereof has a greater diameter than the slot in the second flange, such that when the first and second flange are pulled towards each other the head of the male fastening element engages directly with the surface of the second flange.

Preferably the male fastening element is a screw, but also another male fastening element with a shank is possible.

When a screw is used the female fastening means is possibly constituted by a screw hole in the first flange, in which the screw can be screwed to tighten the first and second flanges towards each other.

In a preferred embodiment the retaining shoe is made of plastics material. Nevertheless in the present invention it is possible to make the retaining shoe of another material, e.g. metal. This contrary to the retaining shoe of EP 1195548 which needs a shoe of elastic plastics material to function.

In a preferred embodiment the pipe clip body is made of metal, preferably steel. Preferably, the pipe clip comprises two pipe clip halves, which are hingedly connected.

The invention will be elucidated in the following description of a preferred embodiment with reference to the drawing, in which:
Fig. 1 shows a view in perspective of a preferred embodiment of a pipe clip according to the invention,
Fig. 2 shows a view in perspective of a half of a pipe clip body of the pipe clip of Fig.1, with a retaining shoe, and
Fig. 3 shows a view in perspective of a retaining shoe of the pipe clip of Fig. 1.

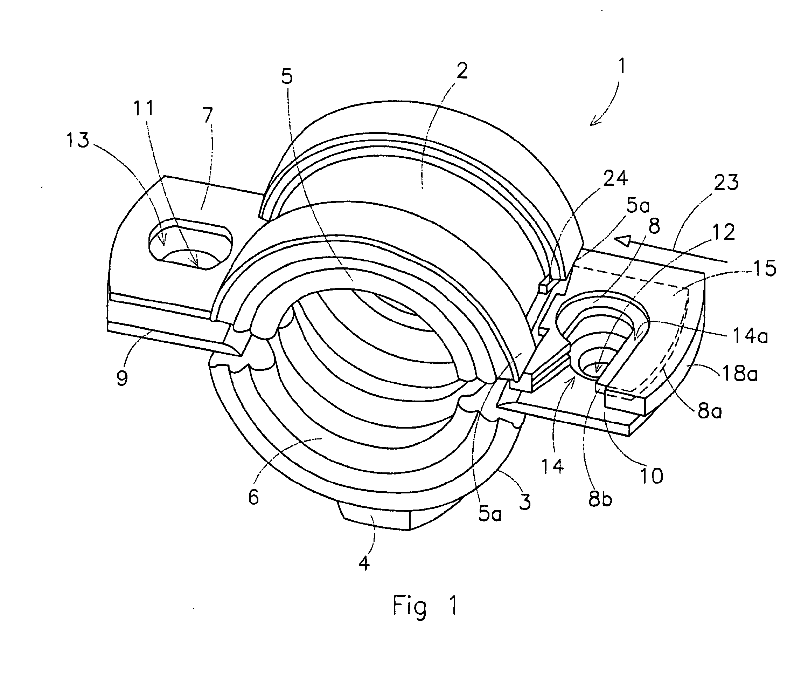

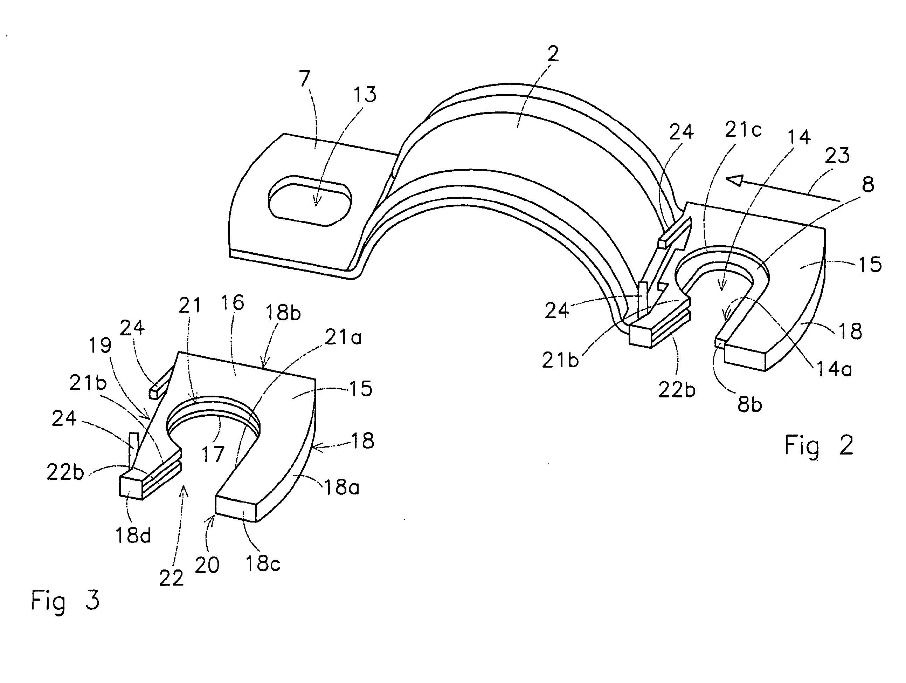

Fig. 1 shows a pipe clip 1. The pipe clip 1 comprises a substantially annular metal clip body which is constituted by two clip halves 2 and 3. The first clip half 2 is shown in Fig. 2. The second clip half 3 has in the embodiment shown a nut 4 attached to the metal clip half body, for coupling the pipe clip to a threaded rod which on its turn is fixed to another support structure, e.g. a wall, a ceiling or a mounting rail. The nut 4 is preferably welded to the clip half 3 which is common in the field of pipe clips.

The first pipe clip half 2 has on one end a radial outwardly extending flange 7 and on the other end a radial outwardly extending flange 8. The second pipe clip half 3 has on one end end a radial outwardly extending flange 9, which in a mounted state (see Fig. 1) opposes the flange 7 of the first clip half 2 and on the other end a radial outwardly extending flange 10 which opposes the flange 8 of the first clip half 2.

In the preferred embodiment of the pipe clip shown in Fig. 1 the flanges 9 and 10 of the second clip half 3 are each provided with a threaded hole 11 and 12 respectively. In these threaded holes 11 and 12 tightening screws (not shown) are screwed in the mounted state of the pipe clip 1.

In the flange 7 of the first clip half 2 an oblong hole 13 is provided, which has a longitudinal axis that extends in the radial direction. In use the shank of the tightening screw connected to the flange 9 of the second clip half 3 extends through the oblong hole 13. When the tightening screw is screwed into the threaded hole 11 in the flange 9, the head of the screw will eventually engage the upper side of the flange 7 and tighten the two flanges 7 and 9 towards each other. The oblong shape of the hole 13 provides some clearance to allow the manipulation of the first clip halve 2 with respect to the second clip half 3 in order to arrange the pipe clip around a pipe (not shown).

It is noted that in particular for the flanges 7 and 9 also another way of connecting and/or tightening the flanges 7 and 9 to each other is possible.

In the other flange 8 of the first clip half 2 a slot 14 is provided. The slot 14 extends substantially in a direction parallel to the axial direction of the pipe clip 1 and is open at one end which is located at a lateral edge 8b of the flange 8. The open end of the slot 14 allows the lateral introduction of a shank of a screw in the slot 14 after the pipe clip 1 has been arranged around a pipe.

On the flange 8 with the slot 14 a retaining shoe 15 is arranged. The retaining shoe 15 in the preferred embodiment is a plastic part. It is noted however that the retaining shoe might also be made of another suitable material e.g. metal. The plastic retaining shoe 15 is preferably made by means of injection moulding.

The retaining shoe 15 comprises two parallel plates 16 and 17 which at their edge are interconnected by a peripheral wall 18 comprising wall parts 18a, 18b, 18c and 18d. The retaining shoe 15 has one open side 19 which in the mounted state is facing the pipe clip body.

The retaining shoe 15 has corresponding slots 21, 22 in the upper and lower plates 16 and 17 respectively, which slots 21, 22 extend from a lateral edge 20 in an axial direction of the pipe clip.

In the mounted state the retaining shoe 15 is arranged on the flange 8 such that it essentially envelopes the flange 8. The lower plate 17 is located on the side which faces the opposing flange 10 of the other clip half 3. The upper plate 16 is located on the side which faces away from that opposing flange 10.

The slots 21, 22 are arranged in a direction corresponding to the slot 14 in the associated flange 8. The slots 21, 22 each have a substantially straight side edge portion 21 a, 22a and an wedge edge portion 21 b, 22b opposing said straight edge portion 21 a, 22a. In the mounted state (see Figs 1 and 2), the wedge edge portions 21 b, 22b extend beyond the corresponding edge of the slot 14 in the metal flange 8 as can be clearly seen in Figs 1 and 2. The opposing straight edge portions 21 a, 22a are located over the upper and lower surface of the flange 8 at a distance from the corresponding side edge of the slot 14 in said flange 8.

In Fig. 1 can be seen that the peripheral wall portion or end wall 18a is located at a distance from the corresponding end edge 8a of the flange 8. Due to this mutual distance between the edge 8a of the flange 8 and the end wall 18a of the retaining shoe 15, the retaining shoe 15 may be slided from the retaining position shown in Figs 1 and 2, in the direction of the annular clip body. Said direction of movement is indicated by arrow 23 in Figs 1 and 2. By moving the retaining shoe 15 in the direction 23 the retaining shoe will end up in the so called receiving position in which the wedge edge portions 21 b and 22b are located at such a distance from the edge 14a of the slot 14 that a shank of the screw (not shown) which is screwed in the hole 12 can be introduced in the slots 21, 22 in the retaining shoe and the slot 14 in the flange 8. The end wall 18a forms on the inner side a stop surface which limits the movement of the retaining shoe 15 in the direction 23 because it will eventually engage the edge 8a of the flange 8.

The retaining shoe 15 has in the preferred embodiment two resilient spring members 24 which are integrally formed on the retaining shoe 15. The latter is not required however. The spring member(s) may just as well be separate parts. Of course also another number of spring members may be applied. The spring members 24 engage the outer side of the clip body half 2 and due to their resiliency bias the retaining shoe 15 into the retaining position as is illustrated in Figs 1 and 2. When the retaining shoe 15 is moved into the direction 23 towards the receiving position, the spring members 24 will be tensioned by this movement.

The halves of the pipe clip body are each provided with an element 5, 6 of vibration isolating material, e.g. rubber or another elastomeric material. The spring members 24 are each inserted between the upper surface of the flange 8 and the head ends of the portions 5a of the vibration isolating element 5 which are located on the outer side of the clip body half 2. In this way the vibration isolating element 5 is used to retain the retaining shoe on the flange 8.

In use, the tensioning screws (not shown) are screwed in the holes 11 and 12 of the pipe clip half 3. The pipe clip halves 2 and 3 are thus coupled to each other at the end of the flanges 7 and 9. The clip halves are arranged around a pipe (not shown). Then the retaining shoe 15 is brought into engagement with the shank of the screw which is screwed in the hole 12 in the flange 10. In particular the wedge portions 21 b and 22b are pushed against the shank whereby the retaining shoe 15 is forced to move in the direction 23. By this movement the shank is eventually allowed to pass the wedge portions 21 b, 22b and enter into the slots 21 and 22 beyond the wedge portions 21 b and 22b and into the end portion of the slot 14 in the flange 8. When the shank has moved beyond the wedge portions 21 b and 22b, the spring members 24 will urge the retention shoe in the opposite direction (opposite to direction 23), whereby the shank will be locked behind the rear end edge of the wedge portions 21b, 22b. The pipe clip 1 is then in a closed preassembly state. The assembly around the pipe can be finalised by screwing the screw further into the hole 12 and bringing the head of the screw into engagement with the upper surface of the flange 8. Thereto the slot 21 in the upper plate 16 of the retaining shoe at the closed end portion 21 c thereof has a greater diameter than the slot 14 in the flange 8.

In the embodiment shown in the figures the retaining shoe has spring members 24 as so called reset means. However, also other reset means might be used as an alternative to the spring members or in addition thereto. It is for example conceivable that the resiliency of the outer portions 5a of the vibration isolating element 5 is used to push the retaining shoe towards the retaining position. In such an embodiment - when the retaining shoe is moved towards the receiving position - it will abut the vibration isolating material 5a and compress it. When the force pushing the shoe in the direction 23 is released the resiliency of the vibration isolating material will push the retaining shoe back towards the retaining position.

## Claims

1. Pipe clip (1) for fastening a pipe to a wall, ceiling or other support surface, the pipe clip (1) comprising a substantially annular pipe clip body which in use surrounds the pipe to be fastened and has a first and a second flange (10, 8) which in use are pulled towards each other by means of a male fastening element having a shank and a head, wherein the first flange (10) is associated with a female fastening means into which the male fastening element is connected to the first flange (10), and wherein the second flange (8) has an end edge (8a) and lateral edges (8b) as well as a slot (14) which opens up in one of the lateral edges (8b) of the second flange (8) to laterally receive the shank of the male fastening element, wherein on the second flange (8) a retaining shoe (15) is arranged, which retaining shoe (15) has a slot (21) which is arranged in a direction corresponding to the slot (14) in the second flange (8), which slot (21) in the retaining shoe (15) has an introduction opening for receiving the shank of the male fastening element followed by a narrowing slot portion, **characterized in that**, the retaining shoe (15) is arranged movable transversely with regard to the slot (14) in the second flange (8) between a retaining position and a receiving position, **in that** the entire slot (21) in the retaining shoe (15) has a width which is equal to or exceeds the diameter of the shank of the male fastening element, and **in that** the slot (21) of the retaining shoe (15) has a wedge portion (21b) on one side edge of the slot (21) forming the narrowing slot portion, wherein - in the retaining position of the retaining shoe (15) - the wedge portion (21b) of the side edge of the slot (21) in the retaining shoe (15) extends beyond the corresponding side edge of the slot (14) in the second flange (8) and the effective distance between the opposing side edge (14a) of the slot (14) in the second flange (8) and the wedge portion (21b) is smaller than the diameter of the shank of the male fastening element, such that, in use, when said shank is inserted into the slots (14, 21) in the second flange (8) and the retaining shoe (15), the shank engages said wedge portion (21b) and forces the retaining shoe (15) to move to the receiving position such that the shank passes beyond the wedge portion (21 b).

2. Pipe clip according to claim 1, wherein the pipe clip (1) comprises reset means (24) to move the retaining shoe (15) from the receiving position towards the retaining position.

3. Pipe clip according to claim 2, wherein reset means comprise at least one spring member (24) arranged on the retaining shoe (15) which forces the retaining shoe (15) into the retaining position.

4. Pipe clip according to claim 3, wherein the spring member (24) engages the outside of the annular pipe clip body.

5. Pipe clip according to claim 3 or 4, wherein the spring member (24) is integrally formed with the retaining shoe (15).

6. Pipe clip according to any one of claims 2 - 5, wherein the reset means comprise an elastically deformable layer provided on the outside of the pipe clip body, wherein - in the receiving position - the retaining shoe (15) is pushed into engagement with the deformable layer, and wherein - when the shank has passed the wedge portion (21 b) - the deformable layer pushes the retaining shoe (15) back towards the retaining position.

7. Pipe clip according to claim 6, wherein the elastically deformable layer is a portion of a vibration isolating element (5), preferably made of rubber or another suitable elastomeric material, which is arranged in the pipe clip body.

8. Pipe clip according to any one of the preceding claims, wherein the retaining shoe (15) comprises two interconnected opposing plates (16, 17) which are located on the opposing sides of the second flange (8).

9. Pipe clip according to any one of the preceding claims, wherein the retaining shoe (15) comprises at least one stop surface (18a) which limits the movement of the retaining shoe (15) with respect to the second flange (8).

10. Pipe clip according to any one of the preceding claims, wherein the slot (21) in the retaining shoe (15) has an edge (21 a) opposing the wedge portion (21 b), which edge (21 a), in the retaining position of the shoe (15), is located over the second flange (8) at a distance from the corresponding side edge (14a) of the slot (14) in the second flange (8).

11. Pipe clip according to any one of the preceding claims, wherein the slot (21) in the shoe (15) at the closed end (21c) thereof has a greater diameter than the slot (14) in the second flange (8), such that when the first and second flange (10, 8) are pulled towards each other the head of the male fastening element engages directly with the surface of the second flange (8).

12. Pipe clip according to any one of the preceding claims, wherein the male fastening element is a screw.

13. Pipe clip according to claim 12, wherein the female fastening means is constituted by a screw hole (12) in the first flange (10).

14. Pipe clip according to any one of the preceding claims, wherein the retaining shoe (15) is made of plastics material.

15. Pipe clip according to any one of the preceding claims, wherein the pipe clip body is made of metal, preferably steel, and/or comprises two pipe clip halves (2, 3), which are hingedly connected.

## Patentansprüche

1. Rohrschelle (1) zum Befestigen eines Rohres an einer Wand, Decke oder anderen Trägeroberfläche, wobei die Rohrschelle (1) einen im wesentlichen runden Rohrschellenkörper umfasst, der im Gebrauch das zu befestigende Rohr umschließt und einen ersten und einen zweiten Flansch (10, 8) aufweist, die im Gebrauch durch ein männliches Befestigungselement, das einen Schaft und einen Kopf aufweist, zueinander gezogen werden, wobei der erste Flansch (10) einem weiblichen Befestigungsmittel zugeordnet ist, in dem das männliche Befestigungselement mit dem ersten Flansch (10) verbunden ist, und wobei der zweite Flansch (8) eine Abschlusskante (8a), Seitenkanten (8b) und einen Schlitz (14) aufweist, der sich in einer der Seitenkannten (8b) des zweiten Flansches (8) öffnet, um den Schaft des männlichen Befestigungselements seitlich aufzunehmen, wobei auf dem zweiten Flansch (8) ein Halteschuh (15) angeordnet ist, der einen Schlitz (21) aufweist, der in einer dem Schlitz (14) im zweiten Flansch (8) entsprechenden Richtung angeordnet ist, wobei der Schlitz (21) im Halteschuh (15) eine Einführöffnung zum Aufnehmen des Schafts des männlichen Befestigungselements gefolgt von einem sich verengenden Schlitzbereich aufweist, **dadurch gekennzeichnet, dass** der Halteschuh (15) quer bezüglich des Schlitzes (14) im zweiten Flansch (8) beweglich zwischen einer Halteposition und einer Aufnahmeposition angeordnet ist, dass der gesamte Schlitz (21) im Halteschuh (15) eine Breite aufweist, die gleich dem Durchmesser des Schafts des männlichen Befestigungselements ist oder diesen übersteigt, und dass der Schlitz (21) des Halteschuhs (15) einen Keilbereich (21b) an einer Seitenkante des Schlitzes (21) aufweist, der den sich verengenden Schlitzbereich bildet, wobei - in der Halteposition des Halteschuhs (15) - sich der Keilbereich (21b) der Seitenkante des Schlitzes (21) im Halteschuh (15) über die entsprechende Seitenkante des Schlitzes (14) im zweiten Flansch (8) hinaus erstreckt und der effektive Abstand zwischen der gegenüberliegenden Seitenkante (14a) des Schlitzes (14) im zweiten Flansch (8) und dem Keilbereich (21b) kleiner als der Durchmesser des Schafts des männlichen Befestigungselements ist, so dass im Gebrauch, wenn der Schaft in die Schlitze (14, 21) im zweiten Flansch (8) und im Halteschuh (15) eingesetzt wird, der Schaft an den Keilbereich (21b) angreift und den Halteschuh (15) dazu zwingt, sich in die Aufnahmeposition zu bewegen, so dass sich der Schaft hinter den Keilbereich (21b) bewegen kann.

2. Rohrschelle (1) nach Anspruch 1, wobei die Rohrschelle (1) Rückstellmittel (23) umfasst, um den Halteschuh (15) von der Aufnahmeposition in die Halteposition zu bewegen.

3. Rohrschelle (1) nach Anspruch 2, wobei die Rückstellmittel wenigstens ein am Halteschuh (15) angeordnetes Federelement (24) umfassen, das den Halteschuh (15) in die Halteposition zwingt.

4. Rohrschelle (1) nach Anspruch 3, wobei das Federelement (24) an einer Außenseite des ringförmigen Rohrschellenkörpers angreift.

5. Rohrschelle (1) nach Anspruch 3 oder 4, wobei das Federelement (24) integral mit dem Halteschuh (15) ausgebildet ist.

6. Rohrschelle (1) nach einem der Ansprüche 2 bis 5, wobei die Rückstellmittel eine elastisch verformbare Schicht umfassen, die an der Außenseite des Rohrschellenkörpers vorgesehen ist, wobei - in der Aufnahmeposition - der Halteschuh (15) in Eingriff mit der verformbaren Schicht gedrückt wird, und wobei - wenn der Schaft den Keilbereich (21b) passiert hat - die verformbare Schicht den Halteschuh (15) zurück in die Halteposition drückt.

7. Rohrschelle (1) nach Anspruch 6, wobei die elastisch verformbare Schicht ein Teil eines Vibrationsisolationselements (5) ist, das vorzugsweise aus Gummi oder einem anderen geeigneten elastomeren Material besteht und im Rohrschellenkörper angeordnet ist.

8. Rohrschelle (1) nach einem der vorstehenden Ansprüche, wobei der Halteschuh (15) zwei miteinander verbundene gegenüberliegende Platten (16, 17) umfasst, die an gegenüberliegenden Seiten des zweiten Flansches (8) angeordnet sind.

9. Rohrschelle (1) nach einem der vorstehenden Ansprüche, wobei der Halteschuh (15) wenigstens eine Stoppoberfläche (18a) aufweist, die die Bewegung des Halteschuhs (15) bezüglich des zweiten Flansches (8) begrenzt.

10. Rohrschelle (1) nach einem der vorstehenden Ansprüche, wobei der Schlitz (21) im Halteschuh (15) eine Kante (21a) gegenüber dem Keilbereich (21b) aufweist, wobei die Kante (21a) in der Halteposition des Schuhs (15) über dem zweiten Flansch (8) in einem Abstand von der entsprechenden Seitenkante (14a) des Schlitzes (14) im zweiten Flansch (8) angeordnet ist.

11. Rohrschelle (1) nach einem der vorstehenden Ansprüche, wobei der Schlitz (21) im Schuh (15) an seinem geschlossenen Ende (21c) einen größeren Durchmesser als der Schlitz (14) im zweiten Flansch (8) aufweist, so dass der Kopf des männlichen Befestigungselements direkt mit der Oberfläche des zweiten Flansches (8) zusammenwirkt, wenn der erste und der zweite Flansch (10, 8) zueinander gezogen werden.

12. Rohrschelle (1) nach einem der vorstehenden Ansprüche, wobei das männliche Befestigungselement eine Schraube ist.

13. Rohrschelle (1) nach Anspruch 12, wobei das weibliche Befestigungsmittel durch ein Schraubenloch (12) im ersten Flansch (10) gebildet ist.

14. Rohrschelle (1) nach einem der vorstehenden Ansprüche, wobei der Halteschuh (15) aus einem Plastikmaterial besteht.

15. Rohrschelle (1) nach einem der vorstehenden Ansprüche, wobei der Rohrschellenkörper aus Metall besteht, vorzugsweise Stahl, und/oder zwei Rohrschellenhälften (2, 3) umfasst, die drehbar verbunden sind.

## Revendications

1. Collier de serrage (1) pour fixer un tuyau sur une paroi, un plafond ou une autre surface de support, le collier de serrage (1) comprenant un corps de collier de serrage sensiblement annulaire qui, en utilisation, entoure le tuyau à fixer et comporte des première et deuxième brides (10, 8) qui, en utilisation, sont tirées l'une vers l'autre au moyen d'un élément de fixation mâle ayant une tige et une tête, dans lequel la première bride (10) est associée à un moyen de fixation femelle dans lequel l'élément de fixation mâle est relié à la première bride (10), et dans lequel la deuxième bride (8) a un bord d'extrémité (8a) et des bords latéraux (8b) ainsi qu'une fente (14) qui s'ouvre sur l'un des bords latéraux (8b) de la deuxième bride (8) pour recevoir latéralement la tige de l'élément de fixation mâle, dans lequel un sabot de rétention (15) est agencé sur la deuxième bride (8), lequel sabot de rétention (15) comporte une fente (21) qui est agencée dans une direction correspondant à la fente (14) dans la deuxième bride (8), laquelle fente (21) dans le sabot de rétention (15) a une ouverture d'introduction pour recevoir la tige de l'élément de fixation mâle suivie d'une portion de fente se rétrécissant, **caractérisé en ce que** le sabot de rétention (15) est agencé de manière à pouvoir se déplacer transversalement par rapport à la fente (14) dans la deuxième bride (8) entre une position de rétention et une position de réception, **en ce que** toute la fente (21) dans le sabot de rétention (15) a une largeur supérieure ou égale au diamètre de la tige de l'élément de fixation mâle, et **en ce que** la fente (21) du sabot de rétention (15) a une portion de cale (21b) sur un bord latéral de la fente (21) formant la portion de fente se rétrécissant, dans lequel, à la position de rétention du sabot de rétention (15), la portion de cale (21b) du bord latéral de la fente (21) dans le sabot de rétention (15) s'étend au-delà du bord latéral correspondant de la fente (14) dans la deuxième bride (8) et la distance effective entre le bord latéral opposé (14a) de la fente (14) dans la deuxième bride (8) et la portion de cale (21b) est inférieure au diamètre de la tige de l'élément de fixation mâle de sorte que, en utilisation, lorsque ladite tige est insérée dans les fentes (14, 21) dans la deuxième bride (8) et le sabot de rétention (15), la tige se met en prise avec ladite portion de cale (21b) et force le sabot de rétention (15) à se déplacer vers la position de réception de sorte que la tige passe au-delà de la portion de cale (21b).

2. Collier de serrage selon la revendication 1, dans lequel le collier de serrage (1) comprend un moyen de réinitialisation (24) pour déplacer le sabot de rétention (15) de la position de réception à la position de rétention.

3. Collier de serrage selon la revendication 2, dans lequel le moyen de réinitialisation comprend au moins un organe de ressort (24) agencé sur le sabot de rétention (15) qui force le sabot de rétention (15) à la position de rétention.

4. Collier de serrage selon la revendication 3, dans lequel l'organe de ressort (24) se met en prise avec l'extérieur du corps de collier de serrage annulaire.

5. Collier de serrage selon la revendication 3 ou 4, dans lequel l'organe de ressort (24) fait partie intégrante du sabot de rétention (15).

6. Collier de serrage selon l'une quelconque des revendications 2 à 5, dans lequel le moyen de réinitialisation comprend une couche élastiquement déformable fournie sur l'extérieur du corps de collier de serrage, dans lequel, à la position de réception, le sabot de rétention (15) est poussé pour se mettre en prise avec la couche déformable, et dans lequel, lorsque la tige a passé la portion de cale (21b), la couche déformable repousse le sabot de rétention (15) à la position de rétention.

7. Collier de serrage selon la revendication 6, dans lequel la couche élastiquement déformable est une portion d'un élément d'isolation de vibration (5), constituée de préférence de caoutchouc ou d'une autre matière élastomère appropriée, qui est agencée dans le corps de collier de serrage.

8. Collier de serrage selon l'une quelconque des revendications précédentes, dans lequel le sabot de rétention (15) comprend deux plaques opposées interconnectées (16, 17) qui sont situées sur les côtés opposés de la deuxième bride (8).

9. Collier de serrage selon l'une quelconque des revendications précédentes, dans lequel le sabot de rétention (15) comprend au moins une surface de butée (18a) qui limite le déplacement du sabot de rétention (15) par rapport à la deuxième bride (8).

10. Collier de serrage selon l'une quelconque des revendications précédentes, dans lequel la fente (21) dans le sabot de rétention (15) a un bord (21a) opposé à la portion de cale (21b), lequel bord (21a), à la position de rétention du sabot (15), est situé sur la deuxième bride (8) à une distance du bord latéral correspondant (14a) de la fente (14) dans la deuxième bride (8).

11. Collier de serrage selon l'une quelconque des revendications précédentes, dans lequel la fente (21) dans le sabot (15) à l'extrémité fermée (21c) de celui-ci a un diamètre supérieur à la fente (14) dans la deuxième bride (8), de sorte que, lorsque les première et deuxième brides (10, 8) sont tirées l'une vers l'autre, la tête de l'élément de fixation mâle se met directement en prise avec la surface de la deuxième bride (8).

12. Collier de serrage selon l'une quelconque des revendications précédentes, dans lequel l'élément de fixation mâle est une vis.

13. Collier de serrage selon la revendication 12, dans lequel l'élément de fixation femelle est constitué d'un trou de vis (12) dans la première bride (10).

14. Collier de serrage selon l'une quelconque des revendications précédentes, dans lequel le sabot de rétention (15) est constitué d'une matière plastique.

15. Collier de serrage selon l'une quelconque des revendications précédentes, dans lequel le corps de collier de serrage est constitué de métal, de préférence d'acier, et/ou de deux moitiés de collier de serrage (2, 3), qui sont reliées en charnière.
